# EUROPEAN PATENT SPECIFICATION

(11) **EP 4 681 160 B1**
(45) Date of publication and mention of the grant of the patent: **09.09.2026**
(21) Application number: 24711159.4
(22) Date of filing: 08.03.2024
(51) Int. Cl.: G06T 7/00, G06T 7/11

(54) **METHOD AND SYSTEM FOR TOOTH WEAR DETECTION ON A VIRTUAL MODEL OF TEETH**
VERFAHREN UND SYSTEM ZUR ZAHNVERSCHLEISSERKENNUNG AUF EINEM VIRTUELLEN ZAHNMODELL
PROCÉDÉ ET SYSTÈME DE DÉTECTION D'USURE DENTAIRE SUR UN MODÈLE VIRTUEL DE DENTS

(30) Priority: 14.03.2023 DK PA202370128
(43) Date of publication of application: 21.01.2026
(73) Proprietor: 3Shape A/S, 1060 Copenhagen K (DK)
(72) Inventor: TRÄFF, Jens Peter, 1060 Copenhagen K (DK)
(74) Representative: Zacco Denmark A/S
(86) International application number: PCT/EP2024/056225
(87) International publication number: WO 2024/188879

(56) References cited:
- EP-A2- 2 204 136
- WO-A1-2022/147160
- US-A1- 2018 168 781

## Description

### Technical field

The disclosure relates to a computer-implemented method and system for detecting indications of tooth wear on a virtual 3D model of a dental situation where a trained neural network is used to estimate an age parameter of a tooth which can be subsequently compared to actual age of the tooth.

### Background

Tooth wear is a dental condition characterizing loss of tooth structure. It is often painful and impairs the function of teeth. Three types of tooth wear occurring are abrasion, attrition, and erosion. Abrasion is physical wear of teeth caused by a factor other than tooth-to-tooth contact, such as inappropriate toothbrushing. Attrition is loss of tooth structure from tooth-to-tooth contact. Dental erosion is dissolving of tooth enamel due to the presence of acids in the mouth.

Damage caused by tooth wear is irreversible and can be difficult to repair. Timely detection and monitoring of tooth wear by general practitioners are therefore essential for preserving tooth structure.

Clinical detection and diagnosis of tooth wear is currently based on direct visual inspections of teeth, which are very subjective. Visual inspections are characterized by low sensitivity and low reproducibility when performed by general practitioners. Furthermore, tooth substance loss is visually detectable only when a significant amount of hard dental tissue is already lost.

Digital dentistry and use of intraoral scanners enabled more accurate dental condition detection methods to be developed, thereby reducing, or completely removing, practitioner's subjectivity. For example, it is possible today to acquire two intraoral scans of a patient's dental situation at different time periods. It is then possible to detect tooth wear by comparing the geometry of scans in order to identify quantifiable differences. The drawback of this method is that tooth wear cannot be determined from only a single scan.

Document WO 2022/147160 A1 discloses a method which includes receiving intraoral scan data of an intraoral cavity of a patient; processing the intraoral scan data to determine, for each dental condition of a plurality of dental conditions, whether the dental condition is detected for the patient and a severity of the dental condition; and presenting indications of the plurality of dental conditions together in a graphical user interface (GUI), wherein the indications show, for each dental condition of the plurality of dental conditions, whether the dental condition was detected for the patient and the severity of the dental condition.

Document US 2018/168781 A1 discloses a system which comprises a scanner, an augmented reality (AR) display and a computing device. The scanner generates intraoral images of a dental arch and the AR display generates additional image data representative of a view from a wearer of the AR display. The computing device receives the intraoral images from the intraoral scanner, generates a virtual three-dimensional model of at least a portion of the dental arch from the intraoral images, receives the additional image data from the AR display, determines, from the additional image data, a region of the view that is outside of the dental arch, generates a visual overlay comprising the virtual three-dimensional model, and sends the visual overlay to the AR display. The AR display displays the visual overlay such that the virtual three-dimensional model is shown in the region of the view that is outside of the dental arch.

Document EP 2 204 136 A2 relates to a manufactured orthodontic archwire, made from a wire which, in a relaxed state, has a generally arcuate configuration corresponding to an archform for a particular patient. The manufactured orthodontic archwire comprises a series of straight segments for placement into a slot of a bracket bonded to a tooth of the patient, which are connected to each other by curved segments, comprising bends and/or twists, each forming a precision geometrical relationship between adjacent straight segments of the wire. At least one pair of adjacent straight slot segments are connected to each other by a curved segment comprising a combination of a bend and a twist, which forms a precision geometrical relationship between the adjacent straight segments in the wire. The invention also extends to a robotic wire bending system comprising a bending robot and a robot controller, the bending robot producing a multitude of customized archwires as described above for a multitude of patients.

There is a clear need to develop methods and systems which will aid in tooth wear detection on a single scan of intraoral situation of the patient.

### Summary

Disclosed herein is computer-implemented method for detecting tooth wear on a virtual 3D model of a dental situation, the method comprising:
- receiving, by a processor, the virtual 3D model of the dental situation,
- obtaining a segmented 3D model by segmenting the virtual 3D model into a plurality of individual teeth and gingiva, wherein the segmented 3D model comprises a tooth characterized by an age parameter,
- encoding the tooth from the segmented 3D model into a latent space of a trained neural network to obtain an encoded tooth representation, wherein the latent space of the trained neural network is continuous and comprises a plurality of clusters of encoded reference teeth representations, wherein the encoded reference teeth representations are clustered according to their corresponding reference teeth age parameters,
- obtaining an estimated age parameter of the tooth by identifying a cluster of encoded reference teeth representations from the plurality of clusters of encoded reference teeth representations comprising the encoded tooth representation,
- comparing the estimated age parameter of the tooth with the age parameter of the tooth,
- detecting tooth wear presence on the tooth based on the comparing step,
- displaying the virtual 3D model and the detected tooth wear presence on the tooth.

In an embodiment of the disclosure a computer-implemented method for detecting tooth wear on the virtual 3D model of the dental situation is disclosed, the method comprising:
- receiving, by the processor, the virtual 3D model of the dental situation,
- obtaining the segmented 3D model by segmenting the virtual 3D model into the plurality of individual teeth and gingiva, wherein the segmented 3D model comprises the tooth characterized by the age parameter,
- encoding the tooth from the segmented 3D model into the latent space of the trained neural network to obtain the encoded tooth representation,
- encoding a plurality of reference teeth cases into the latent space of the trained neural network to obtain the encoded reference teeth representations, wherein each reference tooth case from the plurality of reference teeth cases comprises a reference tooth and an associated reference tooth age parameter,
- clustering the encoded reference teeth representations according to their corresponding reference teeth age parameters to obtain the plurality of clusters of encoded reference teeth representations,
- obtaining the estimated age parameter of the tooth by identifying the cluster of encoded reference teeth representations from the plurality of clusters of encoded reference teeth representations comprising the encoded tooth representation,
- comparing the estimated age parameter of the tooth with the age parameter of the tooth,
- detecting tooth wear presence on the tooth based on the comparing step,
- displaying the virtual 3D model and the detected tooth wear presence on the tooth, wherein the latent space of the trained neural network is continuous.

Expression "3D" throughout the present disclosure refers to a term "three-dimensional". Similarly, term "2D" refers to a term "two-dimensional". Term "virtual 3D model of a dental situation" refers to a virtual, three-dimensional, computer-generated representation of the patient's dental situation. Instead of the term "virtual", term "digital" may be used to refer to the 3D model.

Such virtual 3D model may be constructed, by the processor, based on scan data collected in an intraoral scanning process in which an intraoral scanner may be used to scan the patient's dental situation comprising teeth and gingiva. The virtual 3D model can alternatively be generated by using a conventional 3D scanner, a so-called lab-or desktop scanner, to scan a gypsum model of the patient's dental situation. The virtual 3D model can be stored in a memory of a computer system, for example in a Standard Triangle Language (STL) format.

According to the method of the disclosure the virtual 3D model is received by the processor. The process of performing 3D scanning is not necessarily a part of the method. The 3D scanning may be performed by a dental professional using the intraoral scanner, or the conventional 3D scanner.

The virtual 3D model can be received or accessed by the processor. The virtual 3D model may usually be displayed on a display screen in form of a 3D mesh, a point cloud, a graph, a volumetric representation, or any other suitable 3D representation form.

Further, the method may comprise obtaining a segmented 3D model by segmenting the virtual 3D model into a plurality of individual teeth and gingiva, wherein the segmented 3D model may comprise a tooth characterized by an age parameter.

The age parameter of the tooth may be patient's actual age, for example expressed in years and/or months. Thus, each tooth from the plurality of individual teeth may be characterized by the same age parameter. The age parameter of the tooth may thus be known as it relates to patient's actual age.

In the method according to the disclosure, this age parameter of the tooth, being true age parameter of the patient and patient's teeth, may be compared to the estimated age parameter of the tooth as predicted by the trained neural network.

Segmenting the virtual 3D model may be performed via a segmentation process which allows for identification of distinct dental objects such as individual teeth, parts of individual teeth and/or surrounding gingiva in the virtual 3D model. Individual teeth can be assigned a tooth identifier, for example according to the Universal Numbering Notation (UNN) in which numerals 1-32 may be assigned to human teeth. The segmentation process may comprise use of algorithms such as Principal Component Analysis (PCA) or harmonic fields. The segmentation process may alternatively or additionally comprise use of machine learning models.

Further, the method may comprise encoding the tooth from the segmented 3D model into the latent space of the trained neural network to obtain the encoded tooth representation. The latent space of the trained neural network may be continuous and may comprise the plurality of clusters of encoded reference teeth representations, wherein the encoded reference teeth representations may be clustered according to their corresponding reference tooth age parameters.

Encoding the tooth from the segmented 3D model into the latent space of the trained neural network may comprise feeding the information about geometry of the tooth into the trained neural network without feeding the information about the age parameter into the trained neural network. The objective may be to determine the estimated age parameter of the tooth based on state of tooth wear present on the tooth. This estimated age parameter of the tooth may differ from the age parameter of the tooth.

The trained neural network may be a variational autoencoder network comprised of an encoder and a decoder. Variational autoencoders are regularized versions of autoencoders and may allow for new content generation based on provided input.

Term "encoding" may refer to applying the trained neural network onto the tooth from the segmented 3D model. The tooth may be input into the encoder of the trained neural network to obtain the encoded tooth representation. The encoded tooth representation may be a set of latent space variables, for example a set of scalar numbers, representing the tooth in the latent space of the trained neural network.

The tooth from the segmented 3D model may be in 3D format, such as a point cloud, a graph, a volume or a 3D mesh. The tooth in the 3D mesh format may be referred to as a 3D tooth mesh.

The trained neural network may be suitable for processing input in 2D format. For that purpose, the tooth may be transformed from 3D format into 2D format. One example of 2D format of the tooth may be a flattened planar tooth mesh, obtained by transforming the 3D tooth mesh into a 2D tooth mesh. This transformation process may be referred to as "mesh flattening" and may result in transformation of the tooth from 3D format into the suitable 2D format, without loss of information on three-dimensional placement of vertices, edges and faces of the 3D tooth mesh.

The latent space of a neural network may be well understood as an embedding space comprising representations of input data in form of latent space variables, wherein those latent space variables resembling each other more closely are positioned closer to one another in the latent space relative to more differing latent space variables. The latent space variables may be scalar numbers.

The latent space of the trained neural network may be continuous.

Continuity of the latent space may be understood as a property that characterizes a relationship of latent space variables representing input data, on one side, and output data obtained after decoding the latent space variables with the decoder, on the other side. For example, two closely located latent space variables in the continuous latent space result in closely related content once decoded.

The latent space of the trained neural network may comprise the plurality of clusters of encoded reference teeth representations. The encoded reference teeth representations may be clustered according to their corresponding reference teeth age parameters.

The encoded reference teeth representations may be obtained by feeding the trained neural network with reference information. The reference information may be a plurality of reference teeth cases, wherein each reference tooth case from the plurality of reference teeth cases may comprise a reference tooth and an associated age parameter of the reference tooth.

Each reference tooth may represent a tooth geometry in 2D or 3D format. The reference tooth age parameter associated with each reference tooth may be known and expressed for example in years and/or months. Each reference tooth case may optionally comprise a tooth wear stage parameter which may be a label determined through visual assessment by a practitioner. For example, the tooth wear stage parameter associated with the reference tooth may be one of following values: "mild tooth wear", "moderate tooth wear", "severe tooth wear".

Therefore, the plurality of reference teeth cases may be encoded into the trained neural network, wherein each reference tooth case from the plurality of reference teeth cases may comprise the reference tooth and the corresponding reference tooth age parameter which may be the label indicating age of the reference tooth.

Number of the reference teeth cases may be at least one thousand, preferably at least ten thousand, more preferably at least fifty thousand. The reference teeth cases, once encoded in the trained neural network, may serve as a reference which may be used to estimate an age parameter of a new tooth. Therefore, the plurality of reference teeth cases may comprise the reference teeth of wide age range, for example from ten-year-old reference teeth to ninety-year-old reference teeth.

The plurality of clusters of encoded reference teeth representations may be obtained by performing a statistical analysis on the encoded reference teeth representations.

The encoded reference teeth representations may be in form of latent space variables representing the plurality of reference teeth cases. The latent space variables representing the plurality of reference teeth cases may also be referred to as a set of initial latent space variables.

In an embodiment of the disclosure, each reference tooth case of the plurality of reference teeth cases may be aged in at least three different stages to obtain at least three different reference teeth representations. The at least three stages may correspond to tooth wear after year 10, 20, 30. As an effect, a piece-wise linear trajectory of tooth wear for each reference tooth case may be obtained. Further, all reference tooth cases of the same type (e.g. molars) may be grouped and an average of the corresponding trajectories can be determined. This average of the corresponding trajectories may serve as an aging vector.

The performed statistical analysis may result in identifying dependence of the latent space variables representing the plurality of reference teeth cases to their corresponding reference teeth age parameters. In effect, the plurality of clusters of encoded reference teeth representations may be obtained, wherein the encoded reference teeth representations may be clustered according to their corresponding reference teeth age parameters. For example, clusters representing twenty-five-year-old reference teeth and clusters representing forty-five-year-old reference teeth may be formed, among others.

Moreover, since the latent space of the trained neural network may be continuous, a path between the obtained clusters may be defined. This path may be piece-wise linear between representative data points of the obtained clusters and may be mathematically described. This obtained path may allow changing the age parameter of a tooth representation, for example changing the age parameter from a value of twenty-five years to a value of a forty-five years.

Further, the method according to the disclosure may comprise obtaining the estimated age parameter of the tooth by identifying a cluster of encoded reference teeth representations from the plurality of clusters of encoded reference teeth representations comprising the encoded tooth representation.

In an example this identification of the cluster comprising the encoded tooth representation may be achieved by performing the proximity search on the encoded tooth representation with respect to the plurality of clusters of encoded reference teeth representations. For example, outcome of the proximity search may be a closest data point in the latent space representing the cluster of forty-five-year old reference teeth. This value may then be assigned as the estimated age parameter of the tooth. Once obtained, the estimated age parameter of the tooth may be compared to the known age parameter of that same tooth.

Thus, the method according to the disclosure may allow for determining of the estimated age parameter of the tooth that is input into the trained neural network, by using clustered reference information in the latent space of the trained neural network.

The estimated age parameter of the tooth may differ from the age parameter of the tooth, as the age parameter of the tooth may be the true age of the tooth and that of the patient. A difference between the estimated age parameter of the tooth and the age parameter of the tooth may serve as an indication of tooth wear presence on the tooth. Insight into health status of the tooth may be obtained by comparing the estimated age parameter of the tooth and the age parameter of the tooth.

The method according to the disclosure may further comprise detecting tooth wear presence on the tooth based on the comparing step. For example, if the difference between the estimated age parameter of the tooth and the age parameter of the tooth is above a first threshold, tooth wear presence may be confirmed. The first threshold may be, in an example, a value of five years.

In an embodiment, the method may comprise displaying the virtual 3D model and the detected tooth wear presence on the tooth. The tooth wear presence may be displayed in form of a text alert indicating where the tooth wear has been detected. The tooth wear presence may, alternatively or additionally, be displayed by coloring the tooth in the virtual 3D model in a color different to rest of the teeth of the virtual 3D model.

Therefore, the method according to an embodiment may comprise applying the trained neural network to detect tooth wear in the virtual 3D model of the dental situation.

An advantage of detecting tooth wear on the tooth via the method of the disclosure is reflected in that various levels of tooth wear, from mild to severe, can be precisely and reliably detected. In contrast, manual inspection for tooth wear by the dental practitioner may not be objective, as various levels of tooth wear may be overlooked, unless the tooth wear is severe. Even when the tooth wear present on the tooth is severe, the method according to the disclosure provides clear quantification of the health status that can be easily presented to the patient. For example, it may be communicated to the patient that the tooth, due to tooth wear amount present, appears to be twenty years older than it actually is.

According to an embodiment, encoding the tooth from the segmented 3D model may comprise encoding a sampled matrix representing the tooth.

The sampled matrix may be obtained by sampling the planar tooth mesh, wherein the planar tooth mesh is a 2D representation of the tooth. For example, a raw three-dimensional scan of the surface of the tooth may have tens of thousands of vertices. By sampling the planar tooth mesh, the number of vertices may be significantly reduced, while still preserving the information about the three-dimensional object scanned.

The planar tooth mesh may be obtained by flattening the 3D tooth mesh, wherein the 3D tooth mesh represents the tooth from the segmented 3D model.

The encoded tooth representation may also be referred to as the set of latent space variables representing the tooth. The set of latent space variables may therefore be a representation of the tooth in the latent space of the trained neural network. This set of latent space variables may be a set of scalar numbers.

In an embodiment the trained neural network may be the variational autoencoder. In another embodiment, the trained neural network may be a normalizing flow.

According to an embodiment, the method may further comprise obtaining a set of modified latent space variables corresponding to a cluster of encoded reference teeth representations having reference teeth age parameters substantially equal to the age parameter of the tooth. In this way it may be possible to move, in the latent space of the trained neural network, from a data point corresponding to the estimated age parameter of the tooth to a new data point corresponding to the age parameter of the tooth which is true age of the tooth. In general, it may be possible to move between different data points in the latent space of the trained neural network, wherein each data point may be characterized by a different age parameter.

Thus it may be possible to move in the latent space from the data point representing the cluster corresponding to the estimated age parameter of the tooth to a new data point representing the cluster corresponding to the actual age parameter of the tooth. This feature of moving between the different clusters in the latent space may be referred to as "age slider". Moving between the different clusters in the latent space may be enabled by continuity of the latent space which may result in piece-wise linear path between the different clusters.

Utilizing "age slider" may represent moving through the latent space from one data point to another data point, wherein each data point may be associated with different age parameter of the tooth. A data point in the latent space may be a representative of the clustered encoded reference teeth representations having a same reference tooth age parameter.

By utilizing "age slider" it may be possible, for example, to move within the latent space, from the set of latent space variables corresponding to the tooth with estimated age parameter of, for example, forty-five years, to the set of modified latent space variables corresponding to the tooth with the age parameter of, for example, twenty-five years. As elaborated previously, the age parameter of the tooth may be the true age of the tooth.

The method according to the disclosure may further comprise generating a further tooth by decoding the set of modified latent space variables using the trained neural network. In particular, the decoder of the trained neural network may be used to generate a new tooth geometry, for example the further tooth.

The set of modified latent space variables may therefore be used to reconstruct the surface geometry of the further tooth. The further tooth may represent an ideal model of the tooth, wherein the ideal model of the tooth does not comprise tooth wear. Alternatively or additionally, the ideal model of the tooth may comprise a normal level of tooth wear relative to the age parameter of the tooth. The reference teeth may be labeled for normal level of tooth wear by practitioners. Normal level of tooth wear may, in one embodiment, correspond from 20 to 40 µm per annum.

By decoding the modified latent space variables, the 3D geometry of the further tooth may be predicted. The predicted further tooth may be the ideal model of the tooth not comprising tooth wear, or it may be a model of the tooth with normal level of tooth wear, relative to the age of the tooth.

The method according to an embodiment may comprise detecting a geometric difference between the tooth and the further tooth. In this way, geometries of the ideal model of the tooth and the tooth may be compared. Comparison of these two geometries may be done by first geometrically aligning, in the 3D space, the further tooth and the tooth. Then, geometric differences may be identified between the tooth and the further tooth. The identified geometric differences may represent tooth wear on the tooth.

Detecting the geometric difference may comprise aligning and comparing the tooth and the further tooth.

The detected geometric difference between the tooth and the further tooth, which may be the ideal model of the tooth, may represent tooth wear on the tooth. For example, the age parameter of the tooth may be twenty-five years. Normal level of tooth wear, for the tooth of twenty-five years, may be in the range of 500 micrometers to 1 millimeter. If the detected geometric difference is below 1 millimeter, no tooth wear may be registered. Otherwise, tooth wear may be registered.

The age parameter of the further tooth may be substantially the same as the age parameter of the tooth. By generating the further tooth it may be possible to predict the ideal shape of the tooth without tooth wear or with normal level of tooth wear relative to the age parameter of the tooth.

The plurality of clusters of encoded reference teeth representations, the encoded reference teeth representations clustered according to their corresponding reference teeth age parameters may be obtained by performing the statistical analysis on the set of initial latent space variables. The wording "set of initial latent space variables" throughout the disclosure may be used interchangeably with the "encoded reference teeth representations".

The set of initial latent space variables may be obtained by encoding the plurality of reference teeth cases in the trained neural network, wherein each reference tooth case of the plurality of reference teeth cases may comprise the reference tooth and the associated age parameter of the reference tooth. The associated age parameter of the reference tooth, for example expressed in years, may be understood as a label associated with the reference tooth.

Each reference tooth case may thus comprise the reference tooth, in 2D or 3D format, and the associated known reference tooth age parameter. Optionally, at least some of the reference teeth cases may comprise a known tooth wear parameter, obtained for example by way of manual labeling of the at least some of reference teeth by dental professionals. By encoding the plurality of reference teeth cases, the set of initial latent space variables may be obtained in the latent space of the trained neural network.

The reference teeth similar to each other, for example by level of tooth wear present an/or having substantially same age, will be represented more closely together in the latent space of the trained neural network, compared to the reference teeth less similar to each other, where similarity may be measured for example by the tooth wear level present or by teeth age.

Performing the statistical analysis on the set of initial latent space variables may be performed for the purpose of analyzing dependence of the initial latent space variables to the reference teeth age parameters. A correlation between the initial latent space variables in the latent space may be determined. In this way the initial latent space variables in the latent space may be clustered, such that the initial latent space variables representing reference teeth of same or similar age may be clustered closer together relative to the initial latent space variables representing reference teeth of substantially different age. For example, the initial latent space variables corresponding to forty-five-year-old reference teeth may be clustered in one cluster different from another cluster corresponding to twenty-five-year-old reference teeth.

By performing the statistical analysis of all encoded reference teeth representations labeled with their corresponding reference teeth age parameters, it may be possible to group the encoded reference teeth representations in different clusters representing different reference teeth age parameters. The reference teeth representations may be understood as being identical to the set of initial latent space variables throughout the disclosure.

In an embodiment, performing the statistical analysis on the encoded reference teeth representations may comprise performing a Principal Component Analysis for the purpose of clustering the encoded reference teeth representations according to the corresponding reference teeth age parameters.

In another embodiment, performing the statistical analysis on the encoded reference teeth representations may comprises performing a tabulation analysis for the purpose of clustering the encoded reference teeth representations according to the corresponding reference teeth age parameters. Other clustering algorithms may also be employed such as machine learning clustering techniques, for example.

As a result of performing the statistical analysis on the encoded reference teeth representations, the encoded reference teeth representations may be clustered in the latent space according to their corresponding reference teeth age parameters.

A decision boundary may be created separating different clusters of the encoded reference teeth representations. This decision boundary may allow to determine where a new set of latent variables, representing a new encoded tooth case, belongs in terms of already determined clusters of the encoded reference teeth representations. The encoded reference teeth representations may also be referred to as initial latent space variables.

A statistical parameter, such as a mean and/or a median may be determined from each cluster of the encoded reference teeth representations as a representative of that cluster. This statistical parameter may be used as a target for performing the proximity search to determine where the new set of latent space variables, representing the new encoded tooth case, belongs in terms of already determined clusters of the encoded reference teeth representations. The statistical parameter may serve as a direct target for the proximity search or may be used in determining a decision boundary in the proximity search.

In an embodiment the set of modified latent space variables may be obtained by changing the estimated age parameter of the tooth in the latent space of the trained neural network to a known value of the age parameter of the tooth.

This feature may be referred to as the "age slider", as mentioned previously, and it may allow, in general, to change an estimated age parameter of any tooth encoded into the trained neural network to another age parameter value, as further elaborated below.

First, it may be possible to determine the estimated age parameter of the tooth encoded into the trained neural network. For example, the estimated age parameter may be forty-five years because latent space variables obtained by encoding the tooth belong to this specific cluster as determined, for example, by performing the proximity search. However, this estimated age parameter may differ from the true age parameter of the tooth, which may be twenty-five years for example.

It may then be possible to move, in the latent space of the trained neural network, to the set of modified latent space variables, belonging to a cluster representing twenty-five-year-old teeth. This change may occur by using the "age slider" which means moving through a piece-wise linear path of the latent space from one cluster to another.

It may be possible, subsequently, to generate the further tooth. The further tooth may have a geometry different to that one of the tooth, and it may be obtained by decoding the set of modified latent space variables. The set of modified latent space variables may be comprised in the cluster representing twenty-five-year-old teeth. The geometry of the further tooth may show how the tooth should look like, when having the age parameter of twenty-five years. The further tooth may be the ideal model of the tooth characterized by absence of tooth wear.

The output of the trained neural network, obtained by decoding the set of modified latent space variables, may be in a matrix format. The further tooth, in 3D format, may be generated by transforming the output from the matrix format into 3D format such as the 3D mesh, the point cloud, the volume or any other suitable 3D format.

In an embodiment of the disclosure, disclosed is a data processing apparatus comprising means for carrying out a method according to any described embodiment.

In a further embodiment of the disclosure, disclosed is a computer program product comprising instructions which, when the program is executed by a computer, causes the computer to carry out the method of any described embodiment.

In yet a further embodiment of the disclosure, disclosed is a non-transitory computer readable medium comprising instructions which, when executed by a computer, cause the computer to carry out the method according to any of described embodiments.

In the following section, a training process for the trained neural network is described. In further disclosure, term "neural network" is used to refer to non-trained neural network i.e. the trained neural network prior to completing the training process. Phrase "completing the training process" may be understood as determining weights of the trained neural network such that the trained neural network is suitable for application in embodiments described throughout the disclosure.

The training process may start by receiving training data. The training data may comprise a plurality of training teeth cases, wherein each training tooth case from the plurality of training teeth cases may comprise a training tooth, for example in 3D format or 2D format and optionally an associated known training age parameter. A training age parameter may be understood as an age parameter corresponding to the training tooth. The plurality of training teeth cases may be comprised of more than one hundred thousand training teeth cases, or more preferably more than five hundred thousand training teeth cases.

The plurality of training teeth cases may be obtained by scanning jaws of plurality of patients. Thereby, a plurality of jaw scans may be obtained, which may further be segmented into the plurality of training teeth. In the training data, the training age parameters corresponding to the training teeth may be known. For example, a training tooth associated with a patient who is twenty years old has a training age parameter with a value of twenty years.

The training data may comprise the training teeth cases having training age parameters in a range from 10 years of age to 90 years of age. By having a wide range of training teeth ages, the training process of the neural network may be improved as well as the overall efficiency of the neural network in its subsequent application. In general, all age groups that may be relevant to cover by the subsequent application of the neural network may be represented in the training data.

If the training teeth are in 3D format such as a 3D mesh, then the training teeth may be first converted in 2D format to obtain a 2D representation of each of the training teeth. This conversion may be referred to as "mesh flattening" and is described throughout the disclosure. Alternatively, the neural network may be suitable for processing directly data in 3D format.

Through this pre-processing stage of the training data, sampled matrices representing the training teeth may be obtained which may then be fed into the neural network as an input. This may be referred to as encoding the training data via an encoder of the neural network to obtain latent space variables corresponding to the training data.

An output of the neural network may be obtained by decoding the obtained latent space variables corresponding to the training data, via a decoder of the neural network. The output may be compared to the input to obtain a reconstruction loss describing a difference between the input and the output.

Additionally, a distribution of the latent space variables corresponding to the training data may be obtained and compared to a desired prior. The desired prior may, in an embodiment, be a standard normal distribution. This comparison may provide a statistical distance loss measuring a difference between two distributions.

The reconstruction loss and the statistical distance loss may be used together as a combined loss to train the neural network.

In an embodiment, a regularization term, known as Kullback-Leibler divergence or KL loss, may be used as the statistical distance loss that can measure the difference between two distributions.

The reconstruction loss may comprise a combined structured similarity index measure (SSIM) and L1 loss function used to minimize the error which is the sum of all absolute differences between a true value and a predicted value. SSIM measure and L1 loss function may be weighted adjustably, for example with 84% allocation towards the SSIM measure. This value may provide for suitable prioritization of a structure of the output provided by SSIM measure, over an absolute value of pixels in the output provided by L1 loss function.

The training process may be reiterated until convergence is achieved on the combined loss after which the neural network becomes trained.

The training data may be curated by filtering out artifacts such as fillings, inlays, onlays and/or braces. This curating of the training data focuses the neural network on the effect of light to moderate tooth wear.

Validation data may be used to validate performance of the trained neural network. The validation data may be different to the training data.

During the training process, multiple hyperparameter configurations may be used, one example being an "ADAM" optimizer with a learning rate of 1e-4 and using a learning rate scheduler that decays learning rates on plateaus.

### Brief description of the figures

Aspects of the disclosure may be best understood from the following detailed description taken in conjunction with the accompanying figures. The figures are schematic and simplified for clarity, and they just show details to improve the understanding of the claims, while other details are left out. The individual features of each embodiment may each be combined with any or all features of other embodiments. These and other embodiments, features and/or technical effects will be apparent from and elucidated with a reference to the illustrations described hereinafter in which:
FIG. 1 illustrates a virtual 3D model of a dental situation.
FIG. 2 illustrates a flow chart of a method according to an embodiment.
FIG. 3A-3B illustrate the trained neural network according to an embodiment. The trained neural network comprises an encoder and a decoder, as well as a possible input to, and output from the trained neural network.
FIG. 4 illustrates steps of transforming a 3D tooth mesh into a 2D format for use as the input to the trained neural network.
FIG. 5A-5B illustrate n-dimensional latent space of the trained neural network, visualized as a 2D space. Different age clusters and piece-wise linear paths between the age clusters are shown, as well as 3D tooth geometries corresponding to different age clusters.
FIG. 6 illustrates a dental scanning system according to an embodiment.
FIG. 7 illustrates an exemplary workflow of the patient's visit to the dental practitioner.

### Detailed description

In the following description, reference is made to the accompanying figures, which show by way of illustration how the invention may be practiced.

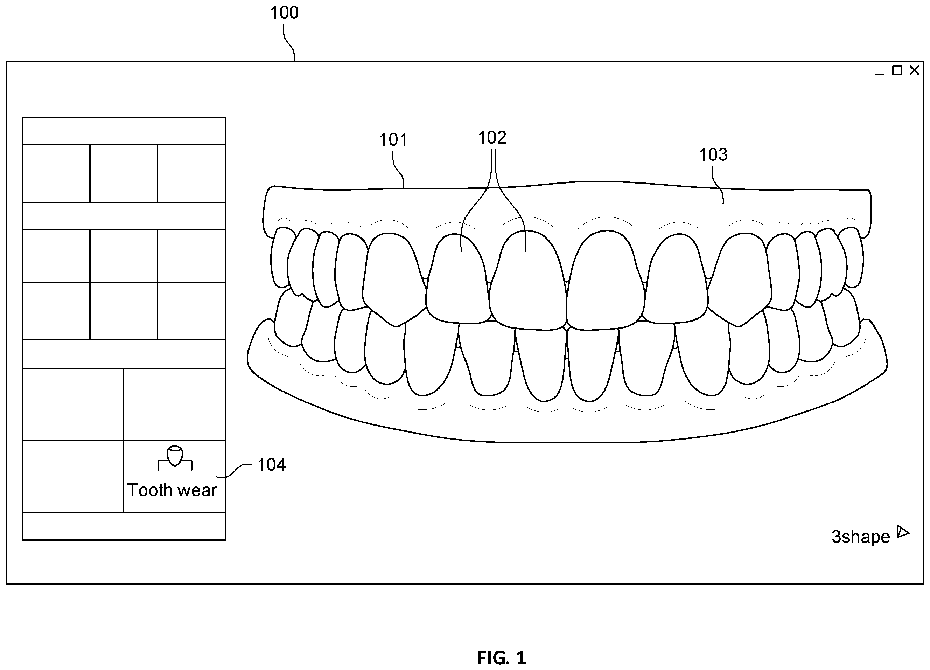

FIG.1 illustrates a user interface 100 with a displayed virtual 3D model 101 of a dental situation of a patient. The virtual 3D model 101 may be displayed on a display screen in form of a 3D mesh, a point cloud, a 3D graph, a volumetric representation, or any other suitable 3D representation form. The virtual 3D model 101 may be representative of the dental situation of the patient, i.e. the 3D model 101 may comprise combined representations of teeth and gingiva of the patient's dental situation. The user interface 100 may comprise a button 104 which, once engaged by a user, initiates the method for analysis of the virtual 3D model 101 for identification of tooth wear presence. The method may, alternatively or additionally, be initiated automatically without user engagement.

To identify and separate individual teeth 102 and gingiva 103 within the virtual 3D model 101, the virtual 3D model 101 may be segmented. Segmentation may refer to identifying facets of the 3D mesh representation of the virtual 3D model 101 belonging to individual teeth 102 as per Universal Numbering System/Notation (UNN). In this way individual teeth 102, or parts of the individual teeth 102, can be analyzed for presence of tooth wear.

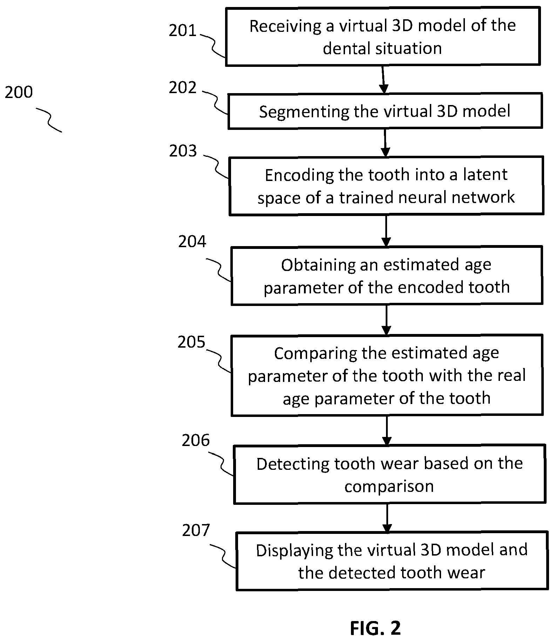

FIG. 2 shows a flowchart illustrating a method 200 according to an embodiment.

First, the virtual 3D model 101 may be received, by the processor, in step 201. The virtual 3D model 101 can be stored in a memory of a computer system, for example in a Standard Triangle Language (STL) format. The virtual 3D model 101 can be received by the processor, for example when the user engages the button 104 in the user interface 100. The virtual 3D model 101 may usually be displayed on the display screen in form of the 3D mesh, the point cloud, the 3D graph, the volumetric representation, or any other suitable 3D representation form.

Step 202 illustrates segmenting the virtual 3D model 101 to obtain a segmented virtual 3D model. The segmented virtual 3D model comprises at least one tooth 102 from a plurality of individual teeth belonging to the virtual 3D model 101. The tooth 102 may be characterized by an age parameter which may be known and correspond to the actual age of the patient. The segmented virtual 3D model may comprise additional teeth and/or gingiva 103. Segmentation of the virtual 3D model 101 may be performed in several ways. According to an example, segmenting may comprise use of surface curvatures to identify boundaries of tooth representations. A curvature threshold value can be selected to distinguish tooth boundary regions from the rest of surface of the virtual 3D model 101.

In another example, segmentation of the virtual 3D model 101 may comprise use of a harmonic field to identify tooth boundaries. On the virtual 3D model 101, a harmonic field may be a scalar attached to each mesh vertex satisfying the condition: ΔΦ=0, where Δ is Laplacian operator, subject to Dirichlet boundary constraint conditions. Above equation may be solved, for example using least squares method, to calculate the harmonic field. Segmented teeth 102 can then be extracted by selecting optimal isolines connecting datapoints with same value as tooth representation boundaries.

In yet another example, segmenting the virtual 3D model 101 may comprise use of a segmentation machine learning model. In particular, the virtual 3D model 101 may be converted into a series of 2D virtual images. The segmentation machine learning model may then be applied to the series of 2D virtual images. For each 2D virtual image, segmentation can be performed to distinguish between different teeth classes and gingiva. After classification of each element of each 2D virtual image, backprojection onto the virtual 3D model 101 may be performed. This method for segmenting the virtual 3D model 101 may be advantageous as the segmentation machine learning model utilizes the series of 2D virtual images, overall resulting in fast and accurate facet classification.

Step 203 of the method 200 illustrates encoding the tooth 102 from the segmented virtual 3D model into a latent space 302 of a trained neural network 300. In this way, an encoded tooth representation may be obtained in form of latent space variables representing the tooth 102. Encoding may refer to applying the trained neural network 300 to the tooth 102.

The latent space 302 of the trained neural network 300 may be understood as an embedding space comprising latent space variables representing encoded input data, wherein the latent space variables resembling each other more closely are positioned closer to one another in the latent space 302.

The latent space 302 of the trained neural network 300 may be continuous. Continuity of the latent space 302 is a property that characterizes a relationship of latent space variables, which may be referred to as data points, in the latent space 302, and an output 305 obtained after decoding the data points with the decoder 303. For example, two close data points in the continuous latent space result in closely related content once decoded.

The latent space 302 of the trained neural network 300 may comprise a plurality of clusters of encoded reference teeth representations. The encoded reference teeth representations may be clustered according to their corresponding reference teeth age parameters.

This plurality of clusters of encoded reference teeth representations may be obtained by feeding the trained neural network 300 with reference information. The reference information may be a plurality of reference teeth cases, wherein each reference tooth case from the plurality of reference teeth cases may comprise a reference tooth and an associated age parameter of the reference tooth.

Each reference tooth may be represented in 2D or 3D format. The age parameter associated with each reference tooth may be known and expressed for example in years and/or months. Each reference tooth case may optionally comprise a tooth wear stage parameter which may be a label determined through visual assessment by a practitioner. For example, the tooth wear stage parameter associated with the reference tooth may be one of following values: "mild tooth wear", "moderate tooth wear", "severe tooth wear".

Number of the reference teeth cases may be at least one thousand, preferably at least ten thousand, more preferably at least fifty thousand.

Step 204 of the method 200 illustrates obtaining an estimated age parameter of the tooth 102. This may be achieved by identifying a cluster of encoded reference teeth representations from the plurality of clusters of encoded reference teeth representations that comprises the encoded tooth representation. In general, the cluster where the encoded tooth representation belongs to, may be identified.

One way to identify the cluster where the encoded tooth representation belongs to, may be to perform a proximity search on the encoded tooth representation of the tooth 102 with respect to the plurality of clusters. For example, outcome of the proximity search may be a closest data point in the latent space 302 belonging to the cluster representing forty-five-year-old reference teeth. This value may then be assigned as the estimated age parameter of the tooth 102. In one example, the estimated age parameter of the tooth 102 may be, instead of a numerical value, a range of values, for example forty to forty-five years.

Thus, the method 200 allows for determination of estimated age of the tooth 102 that is input into the trained neural network 300. The determined estimated age of the tooth 102 may correspond to the age parameter of the tooth 102, if the amount of tooth wear, present on the tooth 102, would occur naturally.

Naturally occurring tooth wear may refer to tooth wear mechanism in which loss of tooth substance is a normal physiological process, where estimated normal vertical loss of enamel is within a range of twenty micrometers to forty micrometers per annum. This range may also be from twenty micrometers to fifty micrometers per annum.

Naturally occurring tooth wear may also be referred to as the normal level of tooth wear.

Contrary to the physiologically occurring tooth wear is a pathological form of tooth wear where rate of wear is greater than expected for the patient's age.

Once obtained, the estimated age parameter of the tooth 102 may be compared to the known age parameter of that same tooth 102. Comparison of the estimated age parameter of the tooth 102 and the age parameter of the tooth 102 is illustrated in step 205 of the method 200.

A significant difference between the estimated age parameter of the tooth 102 and the age parameter of the tooth 102 may be an indication of tooth wear present on the tooth 102. Thereby, insight into health status of the tooth 102 may be obtained by comparing the estimated age parameter of the tooth 102 and the age parameter of the tooth 102.

The method 200, in step 206 may further comprise detecting tooth wear presence on the tooth 102 based on the comparing step 205. For example, if the difference between the estimated age parameter of the tooth 102 and the age parameter of the tooth 102 is above a first threshold, tooth wear presence may be registered on the tooth 102. The first threshold may be, in an example, a numerical value of ten years. Preferably, the first threshold may be five years.

In another example, the first threshold may be set as a function of the actual age of the patient. For example, if the patient is older than fifty years, the first threshold may be set to ten years, otherwise, the first threshold may be set to five years. Adjusting the first threshold may result in accounting for a variety of secondary parameters that may affect estimated tooth age value in older patients. One example of such secondary parameter may be dental recession which is more common to older patients.

In yet another example, detecting tooth wear may comprise detecting exposed dentin.

Step 207 of the method 200 illustrates displaying 207 the virtual 3D model 101 and the detected tooth wear presence on the tooth 102. The tooth wear presence may be displayed in form of a text alert indicating that tooth wear has been detected on the tooth 102. The tooth wear presence may, alternatively or additionally, be displayed by coloring the tooth 102 in the virtual 3D model 101 in a color different to rest of the teeth of the virtual 3D model 101.

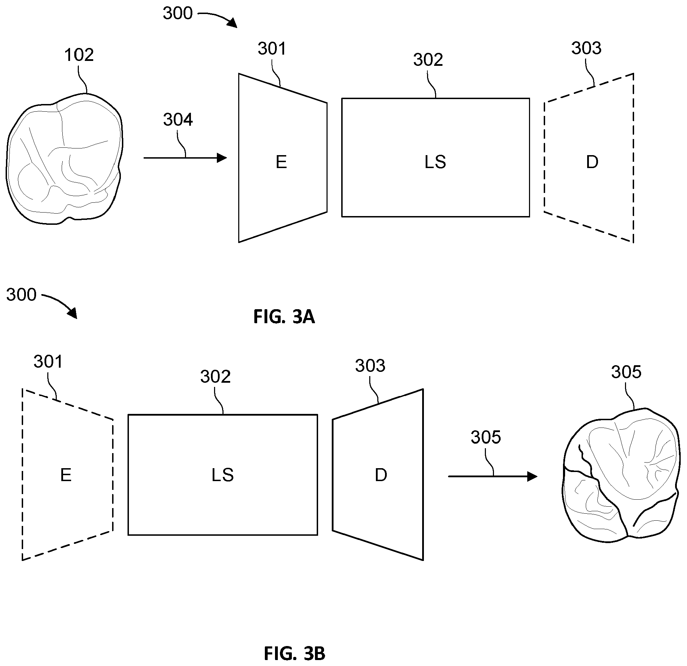

FIG. 3A and 3B both illustrate components of the trained neural network 300 used in an embodiment according to the disclosure. The trained neural network 300 may comprise an encoder 301 and a decoder 303. Additionally, the latent space 302 is illustrated in the figures. The trained neural network 300 may be the same in both FIG. 3A and 3B. FIG. 3A illustrates encoding process, where the decoder 303 is inactive, thus illustrated with a dashed line. FIG. 3B illustrates decoding process, where the encoder 301 is inactive, thus illustrated with a dashed line.

Encoder 301 of the trained neural network 300 may be a convolutional neural network or a dense neural network. The function of the encoder 301 is to convert the input 304 into a set of latent space variables which may then represent that input 304. The input 304 may be the tooth 102 from the segmented virtual 3D model. Once the input 304 is encoded, the encoded tooth representation may be obtained in form of latent space variables representing the tooth 102 in the latent space 302 of the trained neural network 300.

The latent space variables representing the tooth 102 may act as a parametrization of the tooth 102, both for embodying the tooth 102 and for transforming the tooth 102. The latent space variables may be scalar numbers. Thereby, the latent space variables may allow the shape of the tooth 102 to be represented by a set of scalar numbers in the latent space 302. These numbers may not be easily interpreted by human perception, but nevertheless may contain information about the shape of the tooth 102 as discovered by the machine learning method. Further, the set of scalar numbers may be translated back into a corresponding 3D representation of the tooth 102.

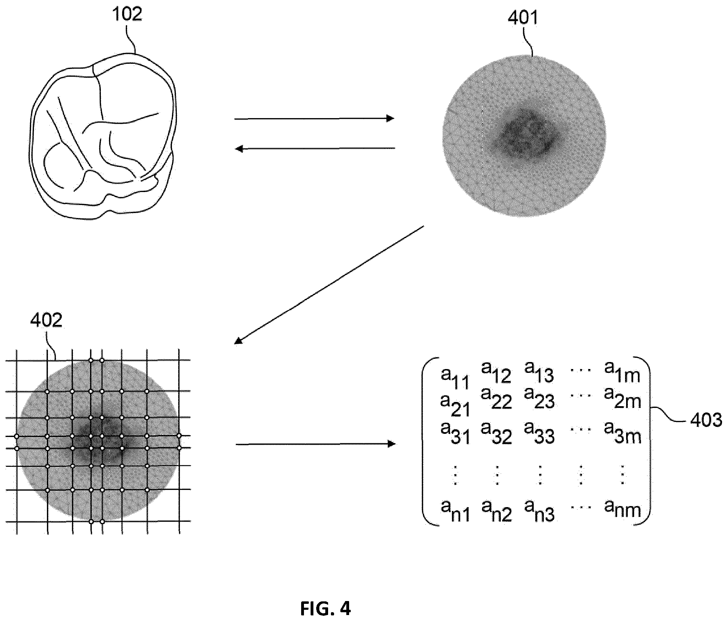

The trained neural network 300 may be suitable for processing two-dimensional input. For that purpose the input 304 may be transformed, from the 3D format such as a surface mesh, into 2D format such as a flattened mesh. This process is known as mash flattening and is further illustrated in FIG. 4. Alternatively, the 3D format of the input 304 may be transformed into 2D format by taking a plurality of virtual snapshots of the input 304.

Alternatively, the trained neural network 300 may be suitable for processing three-dimensional input in form of a surface mesh, or a point cloud directly, and there may be no need to transform the input 304 into 2D format.

The latent space 302 of the trained neural network 300 may comprise a plurality of clusters of encoded reference teeth representations clustered according to their corresponding reference teeth age parameters.

Once the tooth 102 is encoded, an estimated age parameter of the tooth 102 may be determined. This may be achieved by performing the proximity search on the encoded tooth representation with respect to the plurality of clusters of encoded reference teeth representations.

For example, result of the proximity search may be the closest data point in the latent space 302 belonging to the cluster representing forty-five-year-old reference teeth. This value may then be assigned as the estimated age parameter of the tooth 102. Once obtained, the estimated age parameter of the tooth 102 may be compared to the known age parameter of that same tooth 102.

In this way, the estimated age parameter of the tooth 102 that is input into the trained neural network 300 may be determined. The determined estimated age parameter of the tooth 102 may correspond to an age the tooth 102 would have, if the amount of tooth wear, present on the actual tooth 102, would occur naturally. Thereby, the estimated age parameter of the tooth 102 may assume absence of pathological tooth wear. The estimated age parameter may thus correspond to an amount of years needed for the tooth 102 to develop the amount of tooth wear actually present on the tooth 102, naturally.

Naturally occurring tooth wear may refer to tooth wear mechanism in which loss of tooth substance is a normal physiological process, where estimated normal vertical loss of enamel is within the range of twenty micrometers to forty micrometers per annum. The range may also vary, for example the upper endpoint of the range may be fifty micrometers per annum.

Opposite of the physiologically occurring tooth wear is a pathological form of tooth wear where rate of wear is greater than expected for the patient's age. For example, pathological form of tooth wear may have tooth substance loss rate of more than fifty micrometers per annum. Alternatively or additionally, pathological tooth wear may be determined if dentin exposure on the tooth 102 is established by the trained neural network 300.

The estimated age parameter of the tooth 102 and the age parameter of the tooth 102 may be compared. Obtained difference between the estimated age parameter of the tooth 102 and the actual known age parameter of the tooth 102 may be an indication of tooth wear present on the tooth 102. Tooth wear presence on the tooth 102 may be determined based on the comparing step 205. For example, if the difference between the estimated age parameter of the tooth 102 and the age parameter of the tooth 102 is above a first threshold, tooth wear presence may be confirmed on the tooth 102. The first threshold may be, in an example, a value of five years. Preferably, the first threshold may be two years. More preferably, the first threshold may be one year.

The first threshold may be in a range of one year to five years. The first threshold may alternatively be a function of the age parameter of the tooth 102.

If the estimated age parameter of the tooth 102 is higher than the age parameter of the tooth 102, tooth wear presence may be suspected. If the estimated age parameter of the tooth 102 is lower than the age parameter of the tooth 102, it may be suspected that the tooth 102 does not participate optimally in the jaw function.

In one embodiment, tooth wear presence on the tooth 102 may be determined by analyzing the latent space variables in the latent space 302 of the trained neural network 300, wherein the latent space variables may be obtained by encoding the tooth 102 into the trained neural network 300.

In another embodiment, tooth wear presence on the tooth 102 may be determined by comparing the tooth 102 with an ideal model of the tooth 102. This comparison may refer to comparing the geometries of these two teeth representations. The ideal model of the tooth 102, presented as output 305 in FIG. 3B may be obtained as described further below.

The ideal model of the tooth 102 may be obtained by first moving, in the latent space 302, from a data point representing a cluster corresponding to the estimated age parameter of the tooth 102 to a new data point corresponding to the actual age parameter of the tooth 102. This feature may be referred to "age slider". Moving between the different clusters in the latent space 302 may be enabled by continuity of the latent space 302 which may result in piece-wise linear path between the different clusters.

Utilizing "age slider" may represent moving through the latent space 302 from one data point to another data point, wherein each data point may be associated with different age parameter of the tooth 102. A data point in the latent space 302 may be a representative of the clustered reference teeth representations having a same reference tooth age parameter.

In this way, a set of modified latent space variables may be obtained. Subsequently, the modified set of latent space variables may be decoded by the decoder 303 in order to obtain an output 305.

The "age slider" may allow, in general, to move from a data point corresponding to an estimated age parameter of a tooth encoded into the trained neural network 300 to another data point having a different age parameter value. Thereby, aging of a tooth may be utilized to estimate tooth features at different ages.

As a result of decoding, a further tooth may be obtained which may represent changed geometry of the tooth 102. The further tooth may show how the tooth 102 would look like in absence of any tooth wear or with tooth wear amount that would occur naturally. Thereby, the further tooth may be the predicted ideal model of the tooth 102. This is illustrated in FIG. 3B. The age parameter associated with the further tooth may be substantially the same as the actual age of the tooth 102.

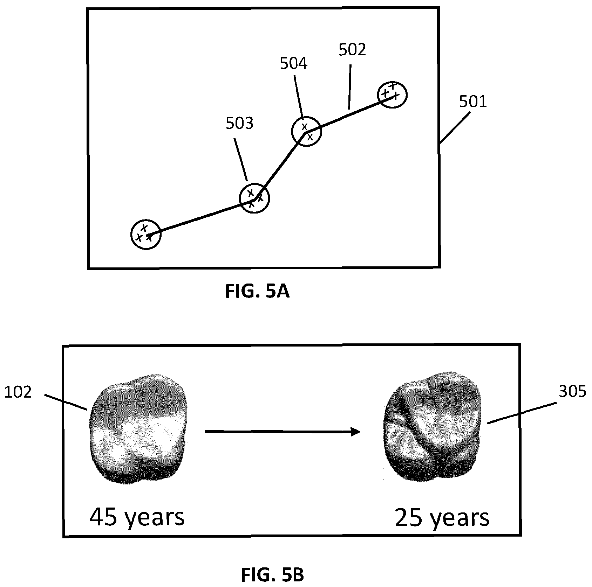

For example, the estimated age parameter of the tooth 102 may be forty-five years because latent space parameters obtained by encoding the tooth 102 may correspond to a specific cluster of previously encoded reference information associated to age parameter of forty-five years. This estimated age parameter may differ from the true age parameter of the tooth 102, which may be twenty-five years, for example. It may then be possible to move, in the latent space 302 of the trained neural network 300, to a different set of latent space variables, associated with a cluster representing twenty-five-year-old teeth. This change may occur by using the "age slider" which means utilizing the piece-wise linear path of the latent space 302 from one cluster to another. This is illustrated further in FIG. 5.

The function of the decoder 303 generally may be to convert a set of latent space variables representing a certain tooth into an output 305. The output 305 may be of same data type as the input 304. The output 305 may be in 3D format or may be in 2D format and subsequently converted into the 3D format. In an embodiment, the decoder 303 may be a neural network, including but not limited to convolutional neural networks or dense neural networks.

In case of FIG. 3B, the output 305 may represent geometry of the ideal model of the tooth 102 and may be obtained by decoding the set of modified latent variables.

Comparing of the geometry of the tooth 102 and the geometry of the ideal model of the tooth 102 may be performed by first aligning the two geometries in the 3D space and subsequently determining differences between the two geometries. Determined differences may indicate presence of tooth wear on the tooth 102. The differences may refer to distances between corresponding vertices of the tooth 102 and the ideal model of the tooth 102. If a difference is larger than a distance threshold, tooth wear may be associated with the corresponding vertex of the tooth 102. The distance threshold may be a value of 0.3 millimeters, for example.

Determined differences that indicate tooth wear presence may be visualized as a heat map overlaying the surface of the tooth 102.

Fig. 4 illustrates steps of transforming the tooth 102 from 3D format into 2D format. After the transformation, the tooth 102 in 2D format may be used as the input 304 to the trained neural network 300.

The tooth 102 may first be flattened to a planar mesh 401, through a mesh flattening procedure. To flatten the tooth 102 into a planar mesh 401, a boundary may be set for cutting the tooth 102. In a three-dimensional mesh, such as 3D format of the tooth 102, places to cut may include but are not limited to: anatomical features such as a gingival margin or a long axis of a tooth, geometric features such as a plane along a hemisphere and/or any axes orthogonal to these.

Cutting the tooth 102 may result in multiple planar meshes. This may be useful for capturing more details of the tooth 102.

The boundary of the surface of the tooth 102 may then be fixed to a boundary of a planar object. The planar object may be of different shapes, including but not limited to: triangles, quadrilaterals, circles, curved quadrilaterals including circles, shapes based on the three-dimensional objects themselves.

Once the boundaries are fixed, the remaining vertices and edges may be mapped to the planar object, flattening the tooth 102 to a planar mesh 401. Various embodiments may use different methods for this mapping. Initially, a matrix of each vertex' connectivity to other vertices may be created, and solving the system of the matrices maps the coordinates of each vertex to the plane (Tutte, William Thomas. "How to draw a graph." Proceedings of the London Mathematical Society 3.1 (1963): 743-767). This connectivity may be weighted in different ways, resulting in different mappings. In various embodiments, these methods may include but are not limited to: uniform weights (Tutte 1963), weights based on angles (Floater, Michael S., and Ming-Jun Lai. "Polygonal spline spaces and the numerical solution of the Poisson equation." SIAM Journal on Numerical Analysis 54.2 (2016): 797-824), weights based on cotangents (Meyer, Mark, et al. "Discrete differential-geometry operators for triangulated 2-manifolds." Visualization and mathematics III. Springer, Berlin, Heidelberg, 2003. 35-57).

The tooth 102 in its initial 3D form and the planar mesh 401 may be bijective, which means it may be possible for each vertex to be mapped back and forth between the tooth 102 and the planar mesh 401.

Sampled planar mesh 402 may be obtained in which each sample may be a point on the planar mesh 401. Sampling may be performed arbitrarily or based on a geometric pattern. The geometric pattern may be regular or irregular. The sampled matrix 402 in FIG. 4 illustrates an irregular geometric pattern in form of a grid used for sampling, where more information may be gathered from the center of the planar mesh 401, with more relevant data, than from the edges with less relevant data. This may be an example of sampling a molar tooth, where the molar has more relevant data at the center compared to the edges. Individual samples may be taken from the intersections of the grid lines and the planar mesh 402.

Based on the individual samples, a sampled matrix 403 may be formed. The sampled matrix 403 may then be used as the input 304 to the trained neural network 300. Matrices may be particularly suitable as input form for the trained neural network 300 as many machine learning methods operate based on matrix operations.

The output 305 of the decoder 303 (FIG. 3B) may be in matrix form, from which a 3D surface of the ideal model of the tooth 102 may be reconstructed.

FIG. 5A illustrates an n-dimensional latent space 302 of the trained neural network 300, visualized as 2D space 501. The latent space 302 of the trained neural network 300 may be continuous and may comprise the plurality of clusters of encoded reference teeth representations clustered according to their corresponding reference teeth age parameters. These correlations may be represented as clusters 503, 504. Different clusters 503, 504 are shown in FIG. 5A, connected by a piece-wise linear path 502 between the clusters 503, 504. The clusters 503, 504 may be formed by analyzing dependence of initial latent space variables, representing the reference teeth, to age, statistically.

This plurality of clusters of encoded reference teeth representations may be obtained by feeding the trained neural network 300with reference information. The reference information may comprise a plurality of reference teeth cases, each reference tooth being characterized with associated reference tooth age parameter and optionally a reference tooth wear stage parameter. Each reference tooth case may be a 2D or a 3D representation of a tooth, its associated reference tooth age parameter may be known. Its optional tooth wear stage may be known through visual assessment by a practitioner.

The correlations between initial latent space variables may be obtained by performing a statistical analysis on these variables. This may be done, in an example by using Principle Component Analysis (PCA). Thereby the clusters 503, 504 may be formed.

Once encoding the tooth 102 into the latent space 302 of the trained neural network 300 is performed, the encoded tooth representation of the tooth 102 may be obtained. This encoded tooth representation may be a set of the latent space variables representing the tooth 102.

It may be determined, for example using nearest neighbor search algorithm, that the set of latent space variables representing the tooth 102 belong to the cluster 503 with associated reference tooth age parameter of forty-five years.

Subsequently, the set of modified latent space variables may be obtained by moving from the cluster 503 to the cluster 504 with associated reference tooth age parameter of, for example, twenty-five years. In this case it may be desired to move to this specific cluster 504 as the characterizing reference tooth age parameter of the cluster 504 corresponds to the true age parameter of the tooth 102. Other possibilities also exist, as it may be possible to move within the latent space 302 to any desirable age cluster. Boundaries regarding number of clusters and associated age spans may be defined by size of the plurality of reference teeth cases encoded into the trained neural network 300.

Decoding of the modified latent space variables may then be performed to obtain the output 305 of the trained neural network 300. This output 305 may be a surface geometry of a younger model of the tooth 102 and may be referred to as ideal model 305 of the tooth 102, as illustrated in FIG. 5B.

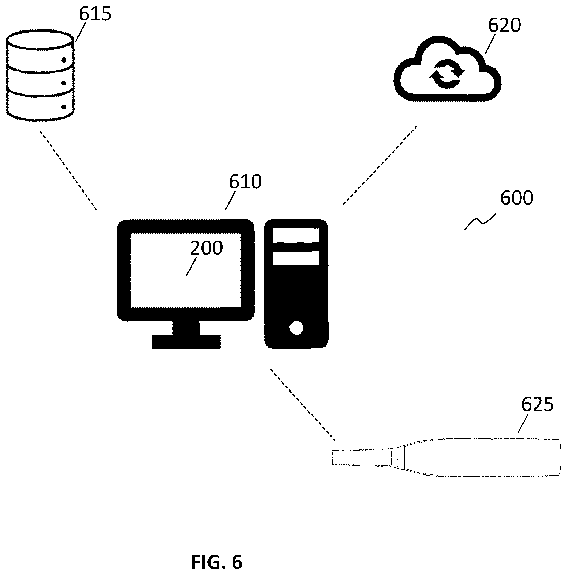

Figure 6 illustrates a dental scanning system 600 which may comprise a computer 610 capable of carrying out the method according to any one or more embodiments of invention, for example according to the method 200. The computer may comprise a wired or a wireless interface to a server 615, a cloud server 620 and an intraoral scanner 625. The intraoral scanner 625 may be capable of recording scan data of the patient's dentition.

The dental scanning system 600 may comprise a processor configured to carry out the method according to one or more embodiments of the disclosure. The processor may be a part of the computer 610, the server 615 or the cloud server 620.

A non-transitory computer-readable storage medium may be comprised in the dental scanning system 600. The non-transitory computer-readable medium can carry instructions which, when executed by a computer, cause the computer to carry out the method according to one or more embodiments of the disclosure.

A computer program product may be embodied in the non-transitory computer-readable storage medium. The computer program product may comprise instructions which, when executed by the computer, cause the computer to perform the method according to any of the embodiments presented herein.

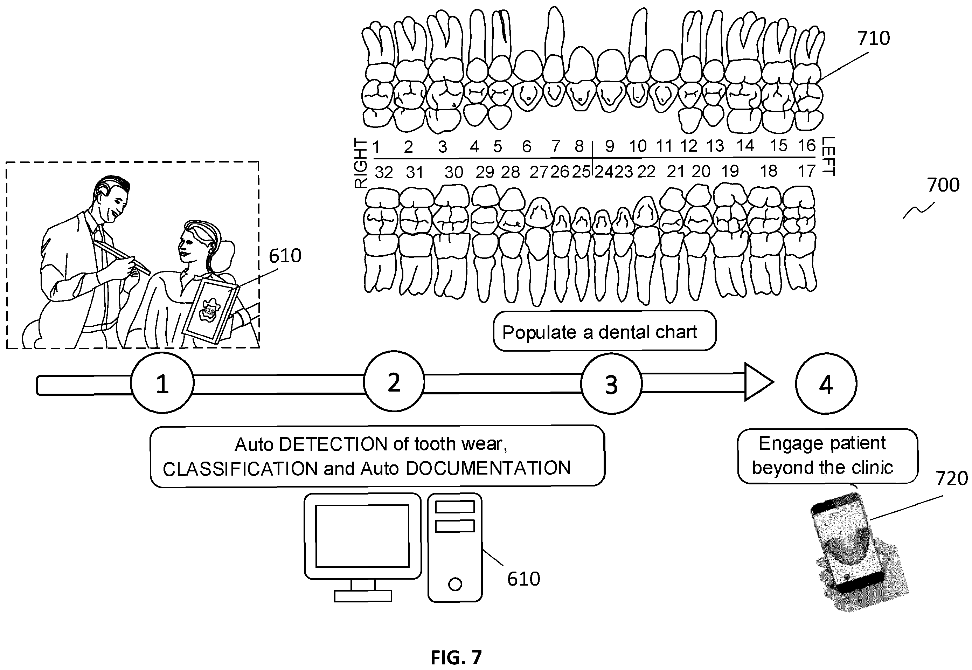

FIG. 7 illustrates an exemplary workflow 700 of the patient's visit to the dental practitioner. In step 1 the patient's oral cavity may be scanned using the intraoral scanner. In step 1 of the workflow 700 in Figure 7, while scanning, the dental practitioner may be able to see the scanning live on a display unit of the computer 610.

At step 2 of Figure 7, the scan data may be further analyzed utilizing one or more software applications in order to detect tooth wear presence in the patient's oral cavity. The step 2 of the workflow 700 may utilize software applications (i.e. application modules) that are configured to detect, classify, monitor, predict, prevent, visualize and/or record tooth wear that may be present in the patient oral cavity.

Step 3 of the workflow 700 exemplifies populating a dental chart 710 with information obtained in the step 2, such as for example tooth wear presence in the patient's dental cavity. The dental chart 710 may be comprised as a part of a wider patient management system.

Furthermore, as illustrated in step 4 of Figure 7, it may be possible to connect at least a part of the dental scanning system to a smart phone 720 and thereby enable transferring of relevant information to the patient. The relevant information may comprise information on tooth wear presence in the patient's oral cavity. In this way, engagement with the patient or any other entity using the analyzed scan data beyond the dental clinic may be enabled.

Although some embodiments have been described and shown in detail, the disclosure is not restricted to such details, but may also be embodied in other ways within the scope of the subject-matter defined in the following claims. In particular, it is to be understood that other embodiments may be utilized, and structural and functional modifications may be made without departing from the scope of the present invention.

## Claims

1. A computer-implemented method for detecting tooth wear on a virtual 3D model (101) of a dental situation, the method comprising:
- receiving, by a processor, the virtual 3D model (101) of the dental situation;
- obtaining a segmented 3D model by segmenting the virtual 3D model (101) into a plurality of individual teeth and gingiva, wherein the segmented 3D model comprises a tooth (102) **characterized by** an age parameter;
- encoding the tooth (102) from the segmented 3D model into a latent space (302) of a trained neural network (300) to obtain an encoded tooth representation, wherein the latent space (302) of the trained neural network (300) is continuous and comprises a plurality of clusters of encoded reference teeth representations, wherein the encoded reference teeth representations are clustered according to their corresponding reference teeth age parameters;
- obtaining an estimated age parameter of the tooth (102) by identifying a cluster of encoded reference teeth representations from the plurality of clusters of encoded reference teeth representations comprising the encoded tooth representation;
- comparing the estimated age parameter of the tooth (102) with the age parameter of the tooth(102);
- detecting tooth wear presence on the tooth (102) based on the comparing step;
- displaying the virtual 3D model (101) and the detected tooth wear presence on the tooth (102).

2. The method according to claim 1, wherein encoding the tooth (102) from the segmented 3D model into the latent space (302) of the trained neural network (300) comprises feeding information about geometry of the tooth (102) into the trained neural network (300).

3. The method according to any previous claim, further comprising encoding a plurality of reference teeth cases into the latent space (302) of the trained neural network (300) to obtain the encoded reference teeth representations, wherein each reference tooth case from the plurality of reference teeth cases comprises a reference tooth and an associated reference tooth age parameter.

4. The method according to the previous claim 3, wherein each reference tooth case from the plurality of reference teeth cases further comprises a tooth wear stage parameter.

5. The method according to any previous claim 3 or 4, further comprising clustering the encoded reference teeth representations according to their corresponding reference teeth age parameters to obtain the plurality of clusters (503, 504) of encoded reference teeth representations.

6. The method according to any previous claim, wherein identifying the cluster of encoded reference teeth representations from the plurality of clusters (503, 504) of encoded reference teeth representations comprising the encoded tooth representation comprises performing a proximity search on the encoded tooth representation with respect to the plurality of clusters (503, 504) of encoded reference teeth representations.

7. The method according to any previous claim, wherein detecting tooth wear presence on the tooth based on the comparing step comprises determining that a difference between the estimated age parameter of the tooth (102) and the age parameter of the tooth (102) is above a first threshold.

8. The method according to the previous claim 7, wherein the first threshold is in a range of one to five years.

9. The method according to the previous claim 7, wherein the first threshold is a function of the age parameter of the tooth (102).

10. The method according to any previous claim, further comprising obtaining a set of modified latent space variables corresponding to a cluster of encoded reference teeth representations having reference teeth age parameters corresponding to the age parameter of the tooth (102).

11. The method according to the previous claim 10, further comprising generating a further tooth by decoding the set of modified latent space variables using the trained neural network (300).

12. The method according to the previous claim 11, further comprising detecting a geometric difference between the tooth (102) and the further tooth.

13. The method according to the previous claim 12, wherein detecting the geometric difference comprises aligning and comparing the tooth (102) and the further tooth.

14. A computer program product comprising instructions which, when the program is executed by a computer, cause the computer to carry out the method of any one of claims 1-13.

15. A computer readable medium comprising instructions which, when executed by a computer, cause the computer to carry out the method of any one of claims 1-13.

## Patentansprüche

1. Computerimplementiertes Verfahren zum Erkennen von Zahnverschleiß an einem virtuellen 3D-Modell (101) einer Zahnsituation, wobei das Verfahren umfasst:
- Empfangen des virtuellen 3D-Modells (101) der Zahnsituation durch einen Prozessor;
- Erhalten eines segmentierten 3D-Modells durch Segmentieren des virtuellen 3D-Modells (101) in eine Mehrzahl von einzelnen Zähnen und Zahnfleisch, wobei das segmentierte 3D-Modell einen Zahn (102) umfasst, der durch einen Altersparameter charakterisiert ist;
- Kodieren des Zahns (102) aus dem segmentierten 3D-Modell in einen latenten Raum (302) eines trainierten neuronalen Netzes (300), um eine kodierte Zahndarstellung zu erhalten, wobei der latente Raum (302) des trainierten neuronalen Netzes (300) kontinuierlich ist und eine Mehrzahl von Clustern kodierter Referenzzahndarstellungen umfasst, wobei die kodierten Referenzzahndarstellungen gemäß ihren entsprechenden Referenzzahn-Altersparametern geclustert werden;
- Erhalten eines geschätzten Altersparameters des Zahns (102) durch Identifizieren eines Clusters von kodierten Referenzzahndarstellungen aus der Mehrzahl von Clustern von kodierten Referenzzahndarstellungen, die die kodierte Zahndarstellung umfassen;
- Vergleichen des geschätzten Altersparameters des Zahns (102) mit dem Altersparameter des Zahns (102);
- Erkennen des Vorhandenseins von Zahnverschleiß an dem Zahn (102) basierend auf dem Vergleichsschritt;
- Anzeigen des virtuellen 3D-Modells (101) und des erkannten Vorhandenseins von Zahnverschleiß an dem Zahn (102).

2. Verfahren nach Anspruch 1, wobei das Kodieren des Zahns (102) aus dem segmentierten 3D-Modell in den latenten Raum (302) des trainierten neuronalen Netzes (300) das Einspeisen von Informationen über eine Geometrie des Zahns (102) in das trainierte neuronale Netz (300) umfasst.

3. Verfahren nach einem vorhergehenden Anspruch, ferner umfassend Kodieren einer Mehrzahl von Referenzzahnfällen in den latenten Raum (302) des trainierten neuronalen Netzes (300), um die kodierten Referenzzahndarstellungen zu erhalten, wobei jeder Referenzzahnfall aus der Mehrzahl von Referenzzahnfällen einen Referenzzahn und einen zugeordneten Referenzzahn-Altersparameter umfasst.

4. Verfahren nach Anspruch 3, wobei jeder Referenzzahnfall aus der Mehrzahl von Referenzzahnfällen ferner einen Zahnverschleißstufenparameter umfasst.

5. Verfahren nach dem vorherigen Anspruch 3 oder 4, ferner umfassend Clustern der kodierten Referenzzahndarstellungen gemäß ihren entsprechenden Referenzzahn-Altersparametern, um die Mehrzahl von Clustern (503, 504) von kodierten Referenzzahndarstellungen zu erhalten.

6. Verfahren nach einem vorhergehenden Anspruch, wobei das Identifizieren des Clusters von kodierten Referenzzahndarstellungen aus der Mehrzahl von Clustern (503, 504) von kodierten Referenzzahndarstellungen, die die kodierte Zahndarstellung umfassen, das Durchführen einer Näherungssuche an der kodierten Zahndarstellung in Bezug auf die Mehrzahl von Clustern (503, 504) von kodierten Referenzzahndarstellungen umfasst.

7. Verfahren nach einem vorhergehenden Anspruch, wobei das Erkennen des Vorhandenseins von Zahnverschleiß an dem Zahn basierend auf dem Vergleichsschritt das Bestimmen umfasst, dass eine Differenz zwischen dem geschätzten Altersparameter des Zahns (102) und dem Altersparameter des Zahns (102) über einem ersten Schwellenwert liegt.

8. Verfahren nach dem vorherigen Anspruch 7, wobei der erste Schwellenwert in einem Bereich von einem bis fünf Jahren liegt.

9. Verfahren nach dem vorherigen Anspruch 7, wobei der erste Schwellenwert eine Funktion des Altersparameters des Zahns (102) ist.

10. Verfahren nach einem vorhergehenden Anspruch, ferner umfassend das Erhalten eines Satzes von modifizierten latenten Raumvariablen, die einem Cluster von kodierten Referenzzahndarstellungen entsprechen, die Referenzzahn-Altersparameter aufweisen, die dem Altersparameter des Zahns (102) entsprechen.

11. Verfahren nach dem vorherigen Anspruch 10, ferner umfassend das Generieren eines weiteren Zahns durch Dekodieren des Satzes von modifizierten latenten Raumvariablen unter Verwendung des trainierten neuronalen Netzes (300).

12. Verfahren nach dem vorherigen Anspruch 11, ferner umfassend das Erkennen einer geometrischen Differenz zwischen dem Zahn (102) und dem weiteren Zahn.

13. Verfahren nach dem vorherigen Anspruch 12, wobei das Erkennen der geometrischen Differenz das Ausrichten und Vergleichen des Zahns (102) und des weiteren Zahns umfasst.

14. Computerprogrammprodukt, das Anweisungen umfasst, die, wenn das Programm durch einen Computer ausgeführt wird, den Computer dazu veranlassen, das Verfahren nach einem der Ansprüche 1 bis 13 durchzuführen.

15. Computerlesbares Medium, das Anweisungen umfasst, die, wenn sie durch einen Computer ausgeführt werden, den Computer dazu veranlassen, das Verfahren nach einem der Ansprüche 1 bis 13 durchzuführen.

## Revendications

1. Procédé mis en œuvre par ordinateur pour détecter une usure dentaire sur un modèle 3D virtuel (101) d'une situation dentaire, le procédé comprenant :
- la réception, par un processeur, du modèle 3D virtuel (101) de la situation dentaire ;
- l'obtention d'un modèle 3D segmenté par la segmentation du modèle 3D virtuel (101) en une pluralité de dents individuelles et de gencives, dans lequel le modèle 3D segmenté comprend une dent (102) **caractérisée par** un paramètre d'âge ;
- le codage de la dent (102) à partir du modèle 3D segmenté dans un espace latent (302) d'un réseau de neurones entraîné (300) pour obtenir une représentation de dent codée, dans lequel l'espace latent (302) du réseau de neurones entraîné (300) est continu et comprend une pluralité de grappes de représentations de dents de référence codées, dans lequel les représentations de dents de référence codées sont regroupées en grappes selon leurs paramètres d'âge de dents de référence correspondants ;
- l'obtention d'un paramètre d'âge estimé de la dent (102) par l'identification d'une grappe de représentations de dents de référence codées parmi la pluralité de grappes de représentations de dents de référence codées comprenant la représentation de dent codée ;
- la comparaison du paramètre d'âge estimé de la dent (102) avec le paramètre d'âge de la dent (102) ;
- la détection d'une présence d'usure dentaire sur la dent (102) en fonction de l'étape de comparaison ;
- l'affichage du modèle 3D virtuel (101) et de la présence d'usure dentaire détectée sur la dent (102).

2. Procédé selon la revendication 1, dans lequel le codage de la dent (102) à partir du modèle 3D segmenté dans l'espace latent (302) du réseau de neurones entraîné (300) comprend l'introduction d'informations concernant une géométrie de la dent (102) dans le réseau de neurones entraîné (300).

3. Procédé selon l'une quelconque des revendications précédentes, comprenant en outre le codage d'une pluralité de cas de dents de référence dans l'espace latent (302) du réseau de neurones entraîné (300) pour obtenir les représentations de dents de référence codées, dans lequel chaque cas de dent de référence parmi la pluralité de cas de dents de référence comprend une dent de référence et un paramètre d'âge de dent de référence associé.

4. Procédé selon la revendication 3 précédente, dans lequel chaque cas de dent de référence parmi la pluralité de cas de dents de référence comprend en outre un paramètre de stade d'usure dentaire.

5. Procédé selon l'une quelconque des revendications 3 ou 4 précédentes, comprenant en outre le regroupement en grappes des représentations de dents de référence codées selon leurs paramètres d'âge de dents de référence correspondants pour obtenir la pluralité de grappes (503, 504) de représentations de dents de référence codées.

6. Procédé selon l'une quelconque des revendications précédentes, dans lequel l'identification de la grappe de représentations de dents de référence codées parmi la pluralité de grappes (503, 504) de représentations de dents de référence codées comprenant la représentation de dent codée comprend la réalisation d'une recherche de proximité sur la représentation de dent codée par rapport à la pluralité de grappes (503, 504) de représentations de dents de référence codées.

7. Procédé selon l'une quelconque des revendications précédentes, dans lequel la détection de la présence d'usure dentaire sur la dent en fonction de l'étape de comparaison comprend la détermination qu'une différence entre le paramètre d'âge estimé de la dent (102) et le paramètre d'âge de la dent (102) est supérieure à un premier seuil.

8. Procédé selon la revendication 7 précédente, dans lequel le premier seuil se situe dans une plage de un à cinq ans.

9. Procédé selon la revendication 7 précédente, dans lequel le premier seuil est fonction du paramètre d'âge de la dent (102).

10. Procédé selon l'une quelconque des revendications précédentes, comprenant en outre l'obtention d'un ensemble de variables d'espace latent modifiées correspondant à une grappe de représentations de dents de référence codées ayant des paramètres d'âge de dents de référence correspondant au paramètre d'âge de la dent (102).

11. Procédé selon la revendication 10 précédente, comprenant en outre la génération d'une autre dent par le décodage de l'ensemble de variables d'espace latent modifiées au moyen du réseau de neurones entraîné (300).

12. Procédé selon la revendication 11 précédente, comprenant en outre la détection d'une différence géométrique entre la dent (102) et l'autre dent.

13. Procédé selon la revendication 12 précédente, dans lequel la détection de la différence géométrique comprend l'alignement et la comparaison de la dent (102) et de l'autre dent.

14. Produit programme informatique comprenant des instructions qui, lorsque le programme est exécuté par un ordinateur, amènent l'ordinateur à réaliser le procédé selon l'une quelconque des revendications 1 à 13.

15. Support lisible par ordinateur comprenant des instructions qui, lorsqu'elles sont exécutées par un ordinateur, amènent l'ordinateur à réaliser le procédé selon l'une quelconque des revendications 1 à 13.
